# FASCICULE DE BREVET EUROPEEN

(11) **EP 2 658 778 B1**
(45) Date de publication et mention de la délivrance du brevet: **12.04.2017**
(21) Numéro de dépôt: 11801765.6
(22) Date de dépôt: 07.10.2011
(51) Int. Cl.: B64D 17/56, B64D 17/62, B64D 1/08

(54) **DISPOSITIF DE SOLIDARISATION /DÉSOLIDARISATION ET DISPOSITIF DE LARGAGE ASSOCIÉ**
BEFESTIGUNGS-/FREIGABEVORRICHTUNG UND ZUGEHÖRIGE ABWURFVORRICHTUNG
SECURING/RELEASING DEVICE, AND RELATED AIRDROP DEVICE

(30) Priorité: 08.10.2010 FR 1004002
(43) Date de publication de la demande: 06.11.2013
(73) Titulaire: Etat français représenté par le Délégué Général pour l'Armement, 75509 Paris Cedex 15 (FR)
(72) Inventeur: FORSANS, Jean-Louis, F-78330 Versailles (FR)
(74) Mandataire: Cabinet Chaillot
(86) Numéro de dépôt international: PCT/FR2011/000544
(87) Numéro de publication internationale: WO 2012/045929

(56) Documents cités:
- WO-A1-2008/086602
- FR-A- 870 356
- GB-A- 129 017
- US-A- 1 242 809
- US-A- 2 828 997
- US-B1- 6 257 524

## Description

L'invention concerne les dispositifs de largage de charge depuis un engin volant.

Le largage de charges à moyenne, grande et très grande hauteur peut avoir pour but le ravitaillement des troupes au sol en s'affranchissant des menaces qui pèsent sur les convois routiers, plus lents et plus vulnérables dans des régions difficiles d'accès ou particulièrement hostiles.

De plus, le largage à grande hauteur (7.500 mètres) permet de préserver les engins volants d'éventuels tirs de missiles.

Le principe repose sur la chute libre d'une charge pouvant atteindre plus d'une tonne, puis de freiner cette charge par l'ouverture de voiles de charge, c'est-à-dire d'un parachute principal, le plus tard possible pour un atterrissage précis tout en garantissant l'intégrité de la charge.

On connait des dispositifs de largage de charge depuis un engin volant comportant un premier parachute de stabilisation, un second parachute principal assurant le ralentissement final de la charge et des moyens aptes à déployer le second parachute à une certaine altitude.

Au moment du largage et dès la sortie de l'avion le premier parachute de stabilisation, constitué d'une voile de taille réduite, est déplié. Cette voile a pour but de stabiliser la charge en rotation.

A moins de 500m mètres du sol, le premier parachute est désolidarisé de la charge tandis que le deuxième parachute est libéré.

Pour cela, les moyens de déploiement comportent généralement un déclencheur chrono-barométrique, des moyens pyrotechniques et des moyens tranchants aptes à couper une sangle liée au premier parachute. La rupture de cette sangle détache au moins partiellement le premier parachute de la charge, premier parachute qui s'éloigne de celle-ci en entrainant le sac du second parachute qui peut alors se déployer.

Le déclencheur chrono-barométrique est un appareil utilisé pour l'ouverture de la voile lors d'un saut en parachute. A une altitude préréglée au sol, il libère un ressort qui entraîne un câble dont une extrémité lui est reliée tandis que l'autre extrémité est connectée à des sectionneurs pyrotechniques, le mouvement du câble produisant le déclenchement de la mise à feu de deux sectionneurs pyrotechniques qui propulsent deux cutters qui coupent la sangle qui relie la charge aux voiles stabilisatrices.

La charge et les voiles stabilisatrices se séparent, cette séparation entrainant le dépliage d'une nouvelle sangle qui vient ouvrir le sac contenant les voiles principales (voiles de charge) du second parachute destiné à freiner la charge jusqu'à l'atterrissage.

Compte tenu de la résistance nécessaire de la sangle ou des sangles qui doivent supporter une charge pouvant être comprise entre 1 et 2 tonnes, et de la force exercée par la charge sur ces dernières, il n'existe actuellement pas d'autre dispositif pour séparer le premier parachute de la charge.

Les moyens pyrotechniques sont utilisés pour projeter les moyens tranchants sur la sangle avec une force importante pour la couper. Un tel dispositif présente l'inconvénient d'être compliqué et de ne pas être réutilisable.

Ce système qui donne satisfaction présente néanmoins deux inconvénients majeurs, à savoir une mise en oeuvre longue et complexe, et un coût élevé lors de l'utilisation puisque les sectionneurs pyrotechniques ne sont pas réutilisables.

Le but de l'invention est de proposer un dispositif de largage complètement et immédiatement réutilisable simple, peu coûteux, et de mise en oeuvre rapide.

La demande internationale PCT WO 2008/086602 divulgue un dispositif de solidarisation/désolidarisation conforme au préambule de la revendication 1.

La solution apportée est, selon une première caractéristique, un dispositif de solidarisation /désolidarisation d'un premier élément apte à supporter une charge, éventuellement de plusieurs tonnes, d'un second élément apte à supporter ce premier élément et ladite charge, ce second élément comportant un support, le dispositif de solidarisation/désolidarisation comprenant, fixés sur ledit support :
- des premier moyens aptes à déclencher la désolidarisation des dits premier et second élements,
- un crochet possédant une première partie fixe solidaire du support et une seconde partie apte à supporter une partie de la charge et mobile par rapport à la première partie entre une première position dite relevée où les dites première et seconde parties forment un crochet et une seconde position où les première et seconde parties ne forment plus ledit crochet, la seconde partie mobile comportant une première extrémité solidaire de la première partie par exemple par un axe de rotation et supportant au moins en partie le poids de ladite charge et du premier élément lorsque le dispositif est en fonctionnement,
- des moyens de verrouillage et de déverrouillage de la première position de ladite seconde partie mobile du crochet, les premier moyens étant aptes à commander le déverrouillage de la première position de ladite seconde partie mobile du crochet,

- dispositif caractérisé en ce que les moyens de verrouillage comportent une broche à bille comportant un plongeur et un corps principal disposés concentriquement directement ou indirectement dans un alésage d'axe OX pratiqué dans le support ou dans un élément qui lui est solidaire, les premier moyens étant reliés au plongeur de la broche et/ou aptes à commander son déplacement, et en ce que, en fonctionnement, lorsque la seconde partie mobile du crochet est verrouillée dans sa première position dite relevée et que le crochet supporte le premier élément et une charge, la seconde partie mobile du crochet est en contact avec les moyens de verrouillage et de déverrouillage de façon à être apte à exercer, directement ou indirectement, sur le corps principal de la broche à bille et selon l'axe OX, une force F1 proportionnelle à la masse du premier élément et de la charge.

Le crochet n'est dans une position dite opérationnelle apte à supporter le premier élément que lorsque d'une part la deuxième partie du crochet est dans sa première position et, d'autre part, les moyens de verrouillage et de déverrouillage sont en position verrouillée et le capteur est apte à commander le déverrouillage de la seconde partie mobile du crochet.

Selon une caractéristique préférentielle, un dispositif de solidarisation/désolidarisation selon l'invention est caractérisé en ce que en fonctionnement, lorsque le crochet supporte le premier élément et une charge, la seconde partie mobile du crochet est apte à exercer, directement ou indirectement, une force se décomposant en une première force F1 sur le corps principal de la broche selon l'axe OX et, le cas échéant, une seconde force F2 sur le corps principal de la broche d'axe OY perpendiculaire à OX, le rapport F1/F2 de la première force sur la seconde force étant au moins égal à 3 et, préférablement, au moins égal à 9.

L'utilisation de la broche à bille et le fait d'avoir une force exercée sur celle principalement selon OX permet d'une part le retrait du plongeur du corps principal de la broche avec une force de quelques kilogrammes donc compatibles avec les forces que peuvent par exemple exercer les capteurs chronobarométriques largement répandus et, d'autre part, le maintien en position de verrouillage de la broche même si une force de plusieurs est exercée sur la broche à bille selon l'axe OX, et ce quelle que soit la masse de la charge de quelques kilos à plusieurs tonnes.

Selon une caractéristique particulière, un dispositif de solidarisation /désolidarisation selon l'invention est caractérisé en ce que les premier moyens sont aptes à commander un désengagement partiel ou total du plongeur du corps principal de la broche.

Selon une autre caractéristique permettant de limiter la force exercée sur la broche et résultant du poids de la charge, les moyens de verrouillage comportent un premier et un second ensembles mobiles, le premier ensemble étant constitué par ladite broche à bille aptes à prendre au moins deux positions dont une première position dans laquelle elle est solidaire du support ou dans un élément qui lui est solidaire et une seconde position dans laquelle elle est désolidarisée du support ou de l'élément qui lui est solidaire, le second ensemble étant constitué par des moyens mobiles entre une première position dite position de verrouillage dans laquelle il sont aptes, en coopération avec ladite broche, à bloquer la deuxième partie du crochet dans sa première position, et une seconde position lorsque le premier ensemble se trouve dans sa seconde position, lesdits moyens du second ensemble étant aptes, dans leur seconde position, à libérer ladite seconde partie mobile du crochet vers sa seconde position, et lesdits moyens du second ensemble étant aptes, lorsque la seconde partie mobile du crochet est dans sa première position, à transmettre au corps principal de la broche et selon l'axe OX ladite force F1 proportionelle à la masse du premier élément et de la charge.

Selon une caractéristique particulière, le second ensemble est constitué par un doigt de verouillage en forme de L solidarisé au support par un axe de rotation et étant mobile par rapport au support entre une première position où une partie du second ensemble est apte à être en contact avec la deuxième partie mobile du crochet, le crochet étant alors dans sa position opérationelle et une seconde position apte à permettre le désengagement de ladite seconde partie du crochet du doigt de verrouillage et, éventuellement :
- le doigt de verrouillage comporte une base apte à entrer en contact avec l'extrémité libre de la deuxième partie du crochet et en ce que cette base et cette extrémité libre aptes à être en contact sont de forme arrondie, par exemple de forme semicylindrique,
   et/ou
- l'extrémité libre du corps principal de la broche repose, sur le premier tiers de la longueur de la partie du doigt de verrouillage qui lui est perpendiculaire, en partant de la base.

Selon une autre caractéristique, les premier moyens comportent un capteur, par exemple de type altimètre ou chrono-barométrique, apte à déclencher la désolidarisation des dits premier et second élements sur dépassement d'un seuil ou réception d'un signal extérieur et, éventuellement la broche à bille est solidaire d'un câble et le capteur est apte à commander le déplacement de ce câble sur dépassement d'un seuil ou réception d'un signal extérieur.

Selon une autre caractéristique un enrouleur semi circulaire est fixé au support et, préférentiellement, les moyens de verrouillage sont, au moins en partie disposés d'un côté de cet enrouleur tandis que le capteur est disposé de l'autre côté de l'enrouleur et la câble repose en partie sur l'enrouleur.

L'invention concerne aussi un dispositif de largage de charge depuis un aéronef comportant un dispositif de solidarisation /désolidarisation selon l'invention dont le support est relié d'une part à un premier parachute dit de stabilisation et d'autre part au sac d'un second parachute dit principal et, éventuellement un dispositif selon l'invention comporte un premier élément solidaire du parachute principal et d'une charge et accroché audit crochet.

Selon une autre caractéristique, ledit premier élément comporte une partie cylindrique médiane et la partie inférieure du crochet forme une ouverture cylindrique complémentaire de celle de ma partie cylindrique du premier élément.

D'autres avantages et caractéristiques apparaîtront dans la description d'un mode de réalisation de l'invention au regard des figures 1 à 6 parmi lesquelles :
- la figure 1 montre un schéma d'une vue en coupe d'un exemple d'un dispositif de solidarisation / désolidarisation selon l'invention dans lequel la partie mobile d'un crochet est dans une première position dite opérationnelle tandis qu'un doigt de verrouillage est lui-même dans une première position de verrouillage.
- la figure 2 montre la même vue en coupe que celle de la figure 1 mais dans laquelle la partie mobile d'un crochet est dans une seconde position.
- La figure 3 montre la même vue en coupe que celle de la figure 1 mais dans laquelle le doigt de verrouillage est dans une seconde position apte à permettra la libération de ladite partie mobile du crochet
- La figure 4 présente une vue en perspective du dispositif selon la figure 1.
- La figure 5 présente l'application d'un dispositif selon la figure 1 à un dispositif de largage de charge.
- La figure 6 schématise la direction des forces exercées par la partie mobile du crochet sur le doigt de verrouillage dans le cadre d'un ensemble selon la figure 5.
- La figure 7 présente une autre variante de réalisation de l'invention.

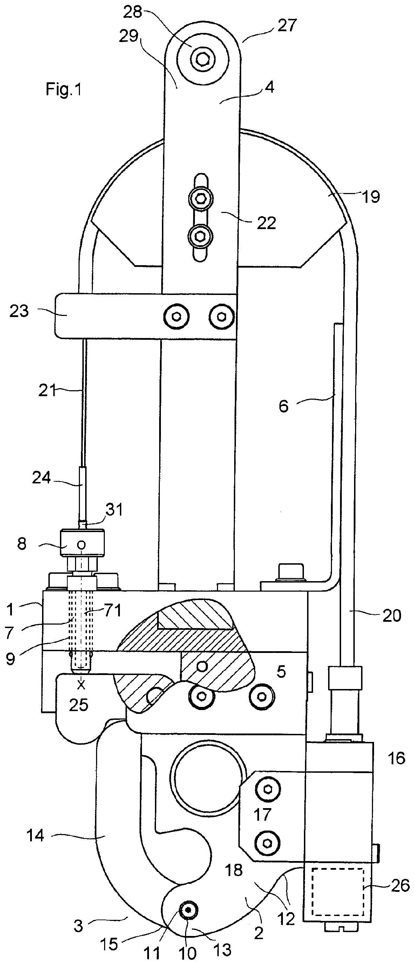

La figure 1 montre un exemple d'un dispositif de solidarisation / désolidarisation 50 selon l'invention.

Ce dispositif 50 de solidarisation / désolidarisation comporte un corps principal 1, aussi appelé support, et servant de support à :
- une première partie 2 d'un crochet 3 via deux joues parallèles 5 soudées au support 1,
- une chape 4 en forme de H
- une cornière 6
- une broche à bille 8 comportant de façon connue un plongeur 71 et un corps principal 7 disposés à l'intérieur d'un alésage 9 d'axe OX pratiqué dans le support 1. L'alésage 9, le plongeur 71 et le corps principal 7 de la broche à bille 8 sont coaxiaux.

La première partie du crochet 3 est constituée par deux branches parallèles 12 en forme de C dont l'une est fixée sur l'une des joues 5 et l'autre sur l'autre joue 5. Chacune des extrémités 13 desdites branches opposées à celles fixées sur les joues 5 comporte un alésage 10, ces alésages étant coaxiaux et un axe 11 est emmanché à force à l'intérieur des dits alésages et relie ainsi lesdites extrémités des deux branches 12.

Le crochet 3 comporte une seconde partie 14 en partie courbe avec, au niveau de sa première extrémité 15, un alésage de diamètre légèrement supérieur à celui de l'axe 11. Cette seconde partie 14 est en partie disposée entre lesdites deux branches 12, l'axe 11 passant par l'alésage pratiqué dans ladite première extrémité 15 de ladite seconde partie. Ainsi, la seconde partie du crochet est apte à pivoter autour de l'axe 11 relié auxdites branches 12.

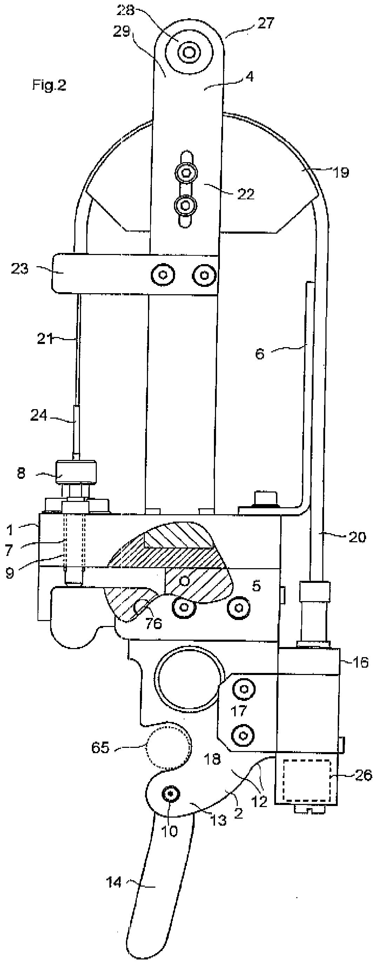

Ainsi, le crochet comporte donc une première partie 2 fixée au support 1 et une seconde partie 14 mobile par rapport à la première partie 2 entre une première position dite relevée ou les dites première et seconde parties forment le crochet 3 présenté sur la figure 1 et une seconde position, présentée sur la figure 2, où les première et seconde parties ne forment plus ledit crochet. Mais dans les deux positions, la seconde partie 14 du crochet 3 comporte une solidarisation à la première partie fixe 2 via l'axe de rotation 11.

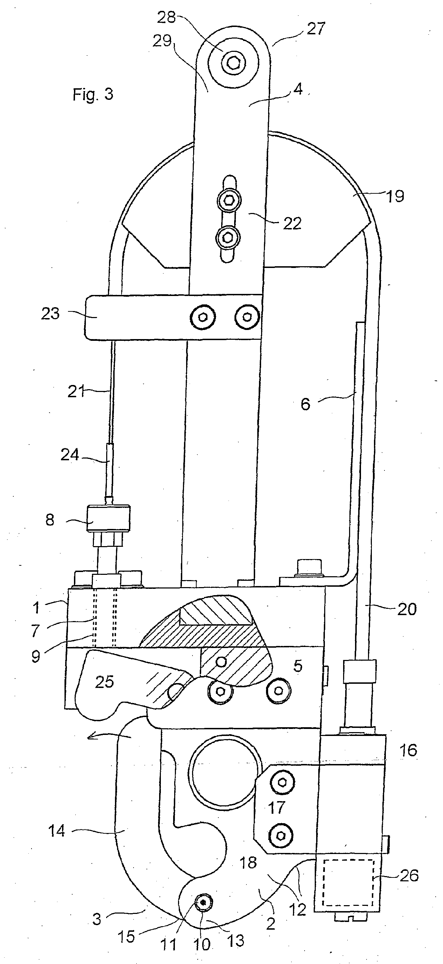

Ce dispositif 50 comporte des moyens (7, 8, 71, 25) de verrouillage et de déverrouillage de la première position de ladite seconde partie mobile 14 du crochet, ce dernier n'étant dans une position opérationnelle apte à supporter une charge que lorsque d'une part la deuxième partie du crochet est dans sa première position et, d'autre part, les moyens de verrouillage et de déverrouillage sont en position verrouillée. Dans cet exemple de réalisation, les moyens de verrouillage comportent :
- d'une part un doigt mobile 25 en forme de L solidarisé aux joues 5 par un axe de rotation 76, et mobile entre une première position où la base du L est apte à être en contact avec la deuxième partie mobile 14 du crochet 3, ce dernier étant alors dans sa position opérationelle et une seconde position, présentée à la figure 3 apte à permettre le désengagement de ladite seconde partie 14 du crochet 3 du doigt de verrouillage 25,
- d'autre part, un second élement, à savoir une broche à bille 8 fixée à l'extrémité d'un câble 21 et apte à prendre, suivant la position de ce câble 21, au moins deux positions dont une première position où elle est insérée dans le corps principal 7 de la broche 8 et dans laquelle elle bloque le doigt de verrouilage 25, et donc la seconde partie 14 du crochet, dans sa première position et une seconde position dans laquelle elle est extraite du corps principal 7 et dans laquelle le doigt de verrouillage 25, et aussi la seconde partie 14 du crochet, sont débloqués.

Un boitier 16 contenant un déclencheur chronobarométrique 26 est fixé via une patte de fixation 17 à une surface latérale 18 de l'une des branches 12 de la partie fixe 2 du crochet et relié à une gaine 20 à l'intérieure de laquelle passe le câble métallique 21. Ce déclencheur chronobarométrique 26 est apte à entrainer la rétraction d'une partie dudit câble métallique 21 à l'intérieur du boitier 16 lorsqu'il détecte une pression supérieure à un seuil prédéterminé. Ce mouvement du câble est apte à extraire la broche à bille 8 du corps principal 7 de la broche 8 provocant ainsi un déblocage du doigt de verrouillage 25.

La gaine 20 est fixée sur la cornière 6 et passe autour d'un secteur d'un enrouleur semicirculaire 19 fixé sur une partie intermédaire 22 de la chape 4. Elle se poursuit ensuite jusqu'à une plaque 23 ayant une fonction de stop gaine et fixée sur la partie intermédiaire de la chape 4. Cette dernière comporte en outre en sa partie supérieure 27 un axe 28 qui relie ses deux branches supérieures 29. Le câble métallique 21 a une longueur supérieure à celle de la gaine : il se poursuit en direction de la broche à bille 8 : son extrémité dépassant de la gaine 20 est fixée à un anneau 24 dont l'extrémité diamétralement opposée est insérée dans un alésage pratiqué dans un axe interne 31 de la broche à bille 8 comportant, au niveau de son extrémité opposée une gorge semi circulaire apte à permettre la rétractation des billes de la broche à l'intérieur du corps principal 7 de la broche 8 et donc la désolidarisation du plongeur 71 du corps principal 7 de la broche 8.

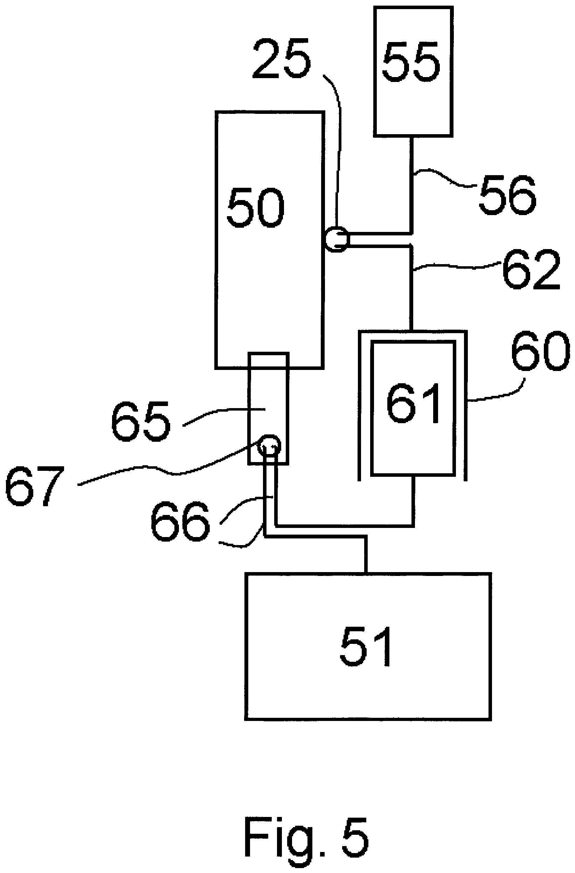

La figure 5 présente un dispositif 50 selon l'invention appliqué au largage d'une charge 51.

Un premier parachute de stabilisation 55 est fixé via une sangle 56 et un premier mousqueton à l'axe 28 fixé dans la partie supérieure 27 de la chape 4 du dispositif 50.

Le sac 60 d'un parachuté principal 61 est fixé par un second mousqueton et une sangle 62 à ce même axe 28.

Un arceau 65 comportant des ouvertures 67 à chacune de ses extrémités est suspendu au crochet 3 du dispositif 50. Des sangles 66 sont fixées à l'arceau via lesdites ouvertures. Ces sangles sont raccordées d'une part au parachute principal 61 et, d'autre part, à la charge 51.

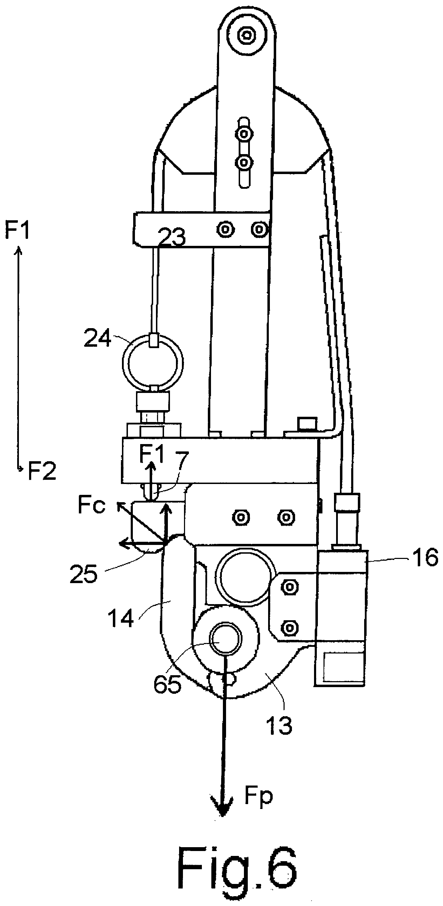

La figure 6 schématise la direction des forces exercées par la partie mobile du crochet sur le doigt de verrouillage dans le cadre d'un ensemble selon la figure 5.

Le crochet 3 est soumis au poids Fp du premier élément (l'arceau 65), du parachute principal et de la charge 51. La partie mobile 14 du crochet exerce sur le doigt de verrouillage 25 une force Fc qui du fait de la forme des parties en contact comporte une composante verticale F1 de direction opposée à celle du poids Fp et une composante horizontale reprise par l'axe de rotation du doigt de verrouillage 25.

La composante verticale F1 est quasiment intégralement transmise à l'extrémité libre du corps principal 7 de la broche à bille 8, ce qui permet son extraction de l'alésage 9 dès que le plongeur 71 est retiré du corps principal 7 de la broche 8 et donc que les billes peuvent rentrer à l'intérieur du corps principal 7.

Ainsi, le doigt de verrouillage 25 a une double fonction puisque d'une part il permet, en coopérant avec la broche à bille 8, de bloquer ou débloquer la seconde partie du crochet et, d'autre part, il transforme une partie du poids de l'arceau 61 et de la charge 51 qui s'exerce verticalement vers le bas en une force F1 dirigée selon l'axe OX de l'alésage 9, du plongeur 71 et du corps principal de la broche 8, en l'occurrence, dans cet exemple de réalisation verticalement vers le haut.

Dans cet exemple de réalisation, comme montré sur cette figure le rapport entre la force F1 selon l'axe OX et la force F2 perpendiculaire à OX exercées par le doigt de verrouillage sur l'extrémité libre du corps principal de la broche 8 est supérieur à 10. Bien évidemment, la force F1 est proportionnelle à la masse du premier élément et de la charge et du parachute principal. Si la charge a une masse d'une tonne, F1 est pratiquement proportionnel au poids de la charge, les poids du premier élément et du parachute principal étant négligeable par rapport à celui de la charge.

Le fonctionnement de ce dispositif est le suivant :
L'arceau 65 est solidarisé par des sangles d'une part à la charge 51 et d'autre part au parachute principal 61 enveloppé dans le sac 60.

Un parachute de stabilisation ainsi que le sac 60 du parachute principal sont fixés à l'axe 28 du dispositif 50 selon l'invention par des mousquetons reliés à des sangles.

Le plongeur 71 est extrait du corps principal 7 de la broche 8 et le doigt de verrouillage 25 est poussé en direction du support 1 afin de libérer la partie mobile 14 du crochet 3 afin qu'elle soit dans la position de la figure 2.

L'arceau 65 est ensuite positionné contre la partie fixe du crochet, comme figuré en pointillé sur la figure 2, puis le doigt de verrouillage 25 est soulevé en direction du support et la partie mobile est remise dans sa première position. Le doigt de verouillage 25 est ensuite abaissé et le plongeur 71 est inséré dans le corps principal 7 de la broche 8 afin de bloquer le doigt de verouillage 25 et, par voie de conséquence la deuxième partie mobile 14 du crochet 3 dans sa première position dite opérationnelle.

Le déclencheur chronobarométrique est ensuite mis en fonctionnement et l'altitude de déclenchement est programmée. Il est ensuite éteint.

L'ensemble ainsi formé est ensuite transporté à bord d'un avion. Juste avant le largage de la charge, le déclencheur chronobarométrique est mis en fonctionnement, et l'ensemble est largué. Immédiatement après le largage, le premier parachute 55 de stabilisation se déploie automatiquement.

Lorsque le déclencheur chronobarométrique détecte ladite altitude préprogrammée, il déclenche la rétractation d'une partie du câble 21 à l'intérieur du boitier 16. Cette rétractation provoque le retrait du plongeur 71 du corps principal 7 de la broche 8, débloquant ainsi le doigt de verrouillage 25. Du fait du poids Fp de la charge, l'extrémité de la partie mobile 14 du crochet 3 qui est en contact avec le doigt de verrouillage et produit une force sur ce dernier en direction du support, cette force étant suffisante pour permettre, du fait de la forme arrondie des deux surfaces en contact, un glissement de l'extrémité de la partie mobile 14 du crochet par rapport à la surface arrondie du doigt de verrouillage et donc la libération de la partie mobile du crochet. L'arceau 65 est alors libéré du crochet 3 et se sépare de ce dernier, le dispositif 50 étant toujours ralenti par le parachuté de stabilisation 55. Comme le parachute principal 61 est solidaire de la charge 51 alors que le sac 60 dans lequel il est enveloppé est solidaire du dispositif 50, ladite séparation produit l'extraction du parachute principal 61 de son sac 60 qui peut alors se déployer et ralentir efficacement la charge jusqu'à l'aterrissage tandis que le parachute de stabilisation est suffisant pour ralentir efficacement le dispositif 50 jusqu'à l'aterrissage.

Comme la séparation s'effectue à faible altitude, typiquement moins de 500 m, la charge 51 et le dispositif 50 atterissent séparemment mais à proche distance l'un de l'autre.

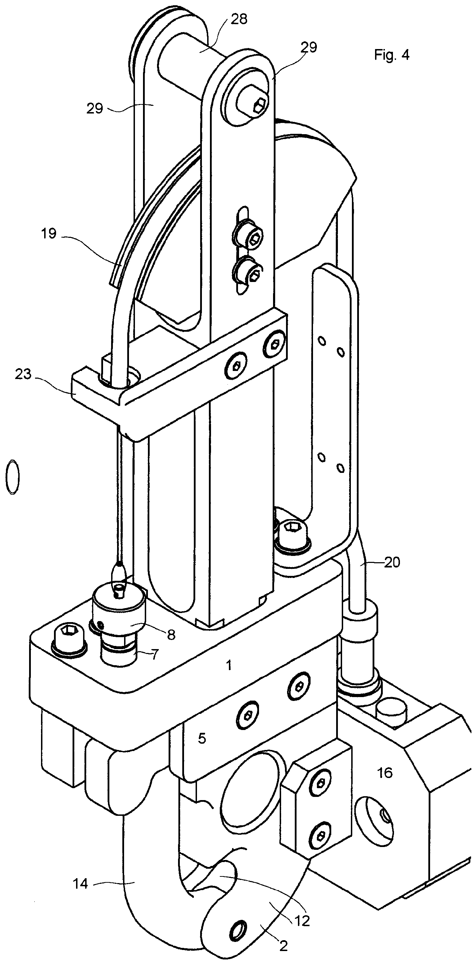

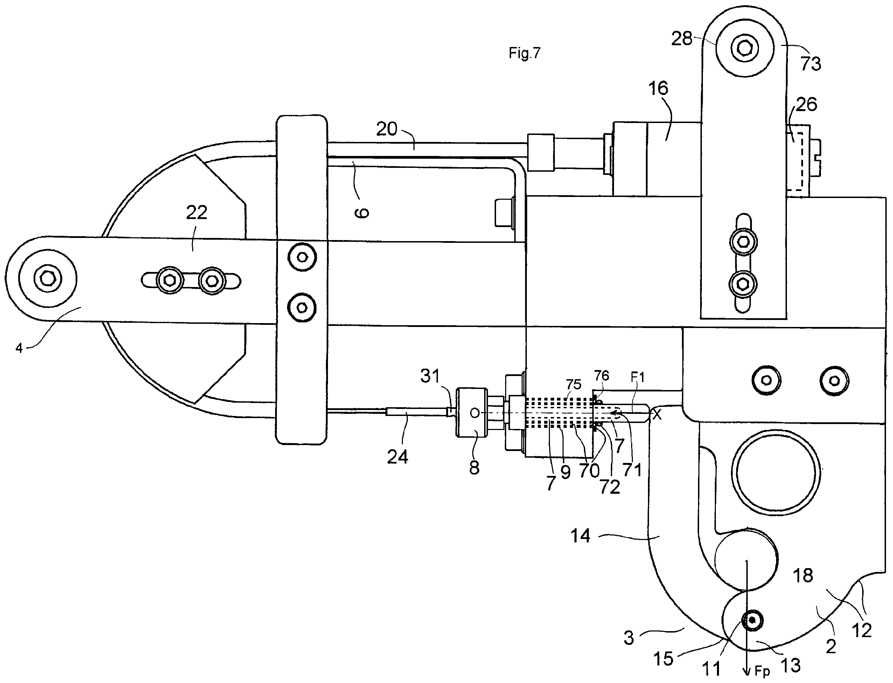

La figure 7 montre une autre variante de réalisation de l'invention dans laquelle le doigt de verrouillage 25 a été supprimé. Cette variante comporte sensiblement les mêmes éléments que ceux des figures 1 à 6 mais les premier moyens (4, 16, 21, 26) aptes à déclencher la désolidarisation de la charge 51 et de l'arceau 65 du crochet 3 ainsi que les moyens de verrouillage, à savoir la broche à bille 8 sont, par rapport aux dites figures décalées d'un angle de π/2 radian et la forme du support est adaptée de façon connue à cette nouvelle disposition dans laquelle l'extrémité libre du corps principal 7 de la broche 8 est en contact directement avec l'extrémité de la partie mobile 14 du crochet. Elle comporte aussi une chape supplémentaire 73 disposée verticalement avec un axe 28 apte à retenir un parachute secondaire tout comme l'axe 28 de la figure 2.
Par rapport aux dites figures 1 à 6, un élément supplémentaire a été introduit entre les bords de l'alésage 9 et le corps principal 7 de la broche à bille 8, en l'occurrence une bague 75 réalisée en acier plus dur que le matériau constitutif du support. Cette bague comporte un épaulement en forme de couronne à l'une de ses extrémités, épaulement contre lequel les billes 72 de la broche 8 prennent appui lorsque la broche est solidarisée au support.

Cette bague permet de pouvoir choisir un matériau moins dur et donc moins cher pour le support et, d'autre part, en cas de dégradation de l'épaulement, permet de ne changer que la bague.
Le crochet 3 est soumis au poids Fp du premier élément (l'arceau 65), du parachute principal et de la charge 51. La partie mobile 14 du crochet supporte une partie du poids Fp et transmet cette force intégralement à l'extrémité libre du corps principale 7 de la broche 8 contre lequel il est en contact. Une force F1 dirigée selon OX est donc appliquée sur le corps principal de la broche tandis que selon l'axe perpendiculaire à OX, la force appliquée sur le corps principal 7 extrêmement faible. Dans cet exemple de réalisation, le rapport entre la force F1 selon l'axe OX et la force F2 perpendiculaire à OX exercées sur l'extrémité libre du corps principal de la broche 8 est très supérieur à 3 et supérieur à 10 (de l'ordre de 20).

De nombreuses modifications peuvent être apportées au mode de réalisation décrit précédemment sans sortir du cadre de l'invention.
Ainsi, la rétractation du câble peut être se produit après détection par un capteur inséré dans le boitier apte à détecter un signal émis par une personne au sol.
Par ailleurs, le câble peut être remplacé par exemple par des moyens électriques aptes à retirer la broche à bille sur réception d'un signal émis par le capteur.
De plus, les moyens de verrouillage peuvent être de nature et avoir une forme différente tout en gardant leur fonctionnalité.
Par ailleurs l'angle entre OX et la verticale, peut être différent de 0 ou π/2 comme illustré dans les figures mais préférablement compris 0 et π.

## Revendications

1. Dispositif de solidarisation/désolidarisation d'un premier élément (65) apte à supporter une charge (51), éventuellement de plusieurs tonnes, d'un second élément apte à supporter ce premier élément et ladite charge, ce second élément comportant un support (1), le dispositif de solidarisation/désolidarisation comprenant, fixés sur ledit support (1) :
- des premier moyens (4, 16, 21, 26) aptes à déclencher la désolidarisation des dits premier et second élements,
- un crochet (3) possédant une première partie (13) fixe solidaire du support (1) et une seconde partie (14) apte à supporter une partie de la charge et mobile par rapport à la première partie (13) entre une première position dite relevée où les dites première et seconde parties forment un crochet et une seconde position où les première et seconde parties ne forment plus ledit crochet, la seconde partie mobile (14) comportant une première extrémité solidaire de la première partie par exemple par un axe de rotation (11) et supportant au moins en partie le poids de ladite charge et du premier élément lorsque le dispositif est en fonctionnement,
- des moyens (7, 8, 25, 71, 76) de verrouillage et de déverrouillage de la première position de ladite seconde partie mobile du crochet (3), les premier moyens (4, 16, 21, 26) étant aptes à commander le déverrouillage de la première position de ladite seconde partie mobile du crochet (3),
dispositif **caractérisé en ce que** les moyens de verrouillage et de déverrouillage (7, 8, 25, 71, 76) comportent une broche à bille (8) comportant un plongeur (71) et un corps principal (7) disposés concentriquement directement ou indirectement dans un alésage (9) d'axe OX pratiqué dans le support (1) ou dans un élément qui lui est solidaire, les premier moyens (4, 16, 21, 26) étant reliés au plongeur (71) de la broche (8) et/ou aptes à commander son déplacement, et **en ce que**, en fonctionnement, lorsque la seconde partie mobile (14) du crochet (3) est verrouillée dans sa première position dite relevée et que le crochet (3) supporte le premier élément (65) et une charge (51), la seconde partie mobile (14) du crochet (3) est en contact avec les moyens de verrouillage et de déverrouillage (25) de façon à être apte à exercer, directement ou indirectement, sur le corps principal (7) de la broche à bille (8) selon l'axe OX, une force F1 proportionnelle à la masse du premier élément et de la charge.

2. Dispositif de solidarisation/désolidarisation selon la revendication 1, **caractérisé en ce que** en fonctionnement, lorsque le crochet (3) supporte le premier élément (65) et une charge (51), la seconde partie mobile (14) du crochet est apte à exercer, directement ou indirectement, une force se décomposant en une première force F1 sur le corps principal de la broche selon l'axe OX et, le cas échéant, une seconde force F2 sur le corps principal (7) de la broche (8) d'axe OY perpendiculaire à OX, le rapport F1/F2 de la première force sur la seconde force étant au moins égal à 3 et, préférablement, au moins égal à 9.

3. Dispositif de solidarisation /désolidarisation selon l'une quelconque des revendications 1 et 2, **caractérisé en ce que** les premier moyens (4, 16, 21, 26) sont aptes à commander un désengagement partiel ou total du plongeur (71) du corps principal (7) de la broche (8).

4. Dispositif selon l'une quelconque des revendications 1 à 3, **caractérisé en ce que** les moyens de verrouillage comportent un premier (7,8, 71) et un second ensembles (25) mobiles, le premier ensemble (7,8, 71) étant constitué par ladite broche à bille (8) apte à prendre au moins deux positions dont une première position dans laquelle elle est solidaire du support (1) ou dans un élément qui lui est solidaire et une seconde position dans laquelle elle est désolidarisée du support ou de l'élément qui lui est solidaire, le second ensemble (25) étant constitué par des moyens mobiles entre une première position dite position de verrouillage dans laquelle ils sont aptes, en coopération avec ladite broche (8), à bloquer la deuxième partie (14) du crochet dans sa première position, et une seconde position lorsque le premier ensemble (7, 8, 71) se trouve dans sa seconde position, lesdits moyens du second ensemble (25) étant aptes, dans leur seconde position, à libérer ladite seconde partie mobile du crochet (3) vers sa seconde position, et lesdits moyens du second ensemble (25) étant aptes, lorsque la seconde partie mobile du crochet (3) est dans sa première position, à transmettre au corps principal (7) de la broche et selon l'axe OX ladite force F1 proportionelle à la masse du premier élément (65) et de la charge (51).

5. Dispositif selon la revendication 4, **caractérisé en ce que** le second ensemble (25) est constitué par un doigt de verouillage (25) en forme de L solidarisé au support par un axe de rotation (76) et étant mobile par rapport au support entre une première position où une partie du second ensemble est apte à être en contact avec la deuxième partie (14) mobile du crochet, le crochet (3) étant alors dans sa position opérationelle et une seconde position apte à permettre le désengagement de ladite seconde partie (14) du crochet (3) du doigt de verrouillage (25).

6. Dispositif selon la revendication 5, **caractérisé en ce que** le doigt de verrouillage (25) comporte une base apte à entrer en contact avec l'extrémité libre de la deuxième partie (14) du crochet (3) et **en ce que** cette base et cette extrémité libre aptes à être en contact sont de forme arrondie, par exemple de forme semicylindrique.

7. Dispositif selon la revendication 6, caractérisé en ce l'extrémité libre du corps principal (7) de la broche (8) repose, sur le premier tiers de la longueur de la partie du doigt de verrouillage qui lui est perpendiculaire, en partant de la base.

8. Dispositif selon l'une quelconque des revendications 1 à 6, **caractérisé en ce que** les premier moyens (4, 16, 21, 26) comportent un capteur (26), par exemple de type altimètre ou chrono-barométrique, apte à déclencher la désolidarisation des dits premier et second élements sur dépassement d'un seuil ou réception d'un signal extérieur.

9. Dispositif selon la revendication 8, **caractérisé en ce que** la broche à bille (8) est solidaire d'un câble (21) et le capteur (26) est apte à commander le déplacement de ce câble sur dépassement d'un seuil ou réception d'un signal extérieur.

10. Dispositif selon l'une quelconque des revendications 1 et 9, **caractérisé en ce qu'**un enrouleur semi circulaire est fixé au support et, préférentiellement, les moyens de verrouillage sont, au moins en partie disposés d'un côté de cet enrouleur tandis que le capteur est disposé de l'autre côté de l'enrouleur et la câble repose en partie sur l'enrouleur.

11. Dispositif de largage d'une charge depuis un aéronef comportant un dispositif de solidarisation /désolidarisation selon l'une quelconque des revendications 1 à 10 dont le support est relié d'une part à un premier parachute dit de stabilisation et d'autre part au sac d'un second parachute dit principal.

12. Dispositif de largage selon la revendication 11, **caractérisé en ce qu'**il comporte un premier élément solidaire du parachute principal et d'une charge et accroché audit crochet.

13. Dispositif de largage selon la revendication 11, **caractérisé en ce que** ledit premier élément comporte une partie cylindrique médiane et la partie inférieure du crochet forme une ouverture cylindrique complémentaire de celle de la partie cylindrique du premier élément.

## Patentansprüche

1. Befestigungs-/Freigabevorrichtung für ein erstes Element (65), das fähig ist, eine Ladung (51) zu tragen, eventuell von mehreren Tonnen, und für ein zweites Element, das fähig ist, dieses erste Element und besagte Ladung zu tragen, wobei dieses zweite Element einen Träger (1) umfasst, wobei die Befestigungs-/Freigabevorrichtung, folgende auf dem Träger (1) befestigte Bestandteile umfasst:
- erste Mittel (4, 16, 21, 26), die geeignet sind, die Freigabe des genannten ersten und zweiten Elements einzuleiten,
- einen Haken (3), der ein erstes festes Teil (13) besitzt, das mit dem Träger (1) verbunden ist, und ein zweites Teil (14), das fähig ist, einen Teil der Ladung zu tragen, und im Vergleich zu dem ersten Teil (13) beweglich ist zwischen einer ersten Position, genannt angehobene, in der das erste und das zweite Teil einen Haken bilden, und einer zweiten Position, in der das erste und das zweite Teil nicht den Haken bilden, wobei das bewegliche zweite Teil (14) ein erstes Ende umfasst, das mit dem ersten Teil verbunden ist, zum Beispiel durch eine Drehachse (11), und das mindestens zum Teil das Gewicht der Ladung und des ersten Elements trägt, wenn die Vorrichtung in Betrieb ist,
- Mittel (7, 8, 25, 71, 76) zur Verriegelung und Entriegelung der ersten Position des beweglichen zweiten Teils des Hakens (3), wobei die ersten Mittel (4, 16, 21, 26) geeignet sind, die Entriegelung der ersten Position des beweglichen zweiten Teils des Hakens (3) zu steuern,
wobei die Vorrichtung **dadurch gekennzeichnet ist, dass** die Mittel zur Verriegelung und Entriegelung (7, 8, 25, 71, 76) einen Kugelsperrbolzen (8) umfassen, der ein Tauchrohr (71) und einen Hauptkörper (7) umfasst, die direkt oder indirekt konzentrisch in einer Bohrung (9) der Achse OX in dem Träger (1) angeordnet sind oder in einem Element, das damit verbunden ist, wobei die ersten Mittel (4, 16, 21, 26) mit dem Tauchrohr (71) des Stiftes (8) verbunden und/oder geeignet sind, seine Bewegung zu steuern, sowie dadurch dass, im Betrieb, wenn das bewegliche zweite Teil (14) des Hakens (3) in seiner ersten Position, genannt angehobene, verriegelt ist und der Haken (3) das erste Element (65) und eine Ladung (51) trägt, das bewegliche zweite Teil (14) des Hakens (3) in Kontakt mit den Mitteln zur Verriegelung und Entriegelung (25) steht, um direkt oder indirekt auf den Hauptkörper (7) des Kugelsperrbolzens (8) gemäß der Achse OX eine Kraft F1 proportional zur Masse des ersten Elements und der Ladung auszuüben.

2. Befestigungs-/Freigabevorrichtung nach Anspruch 1, **gekennzeichnet dadurch, dass** im Betrieb, wenn der Haken (3) das erste Element (65) und eine Ladung (51) trägt, das bewegliche zweite Teil (14) des Hakens in der Lage ist, direkt oder indirekt eine Kraft auszuüben, die sich in eine erste Kraft F1 auf den Hauptkörper des Kugelsperrbolzens gemäß der Achse OX und, gegebenenfalls, eine zweite Kraft F2 auf den Hauptkörper (7) des Kugelsperrbolzens (8) der Achse OY senkrecht zu OX aufteilt, wobei das Verhältnis F1/F2 der ersten Kraft zu der zweiten Kraft mindestens gleich 3 und vorzugsweise mindestens gleich 9 ist.

3. Befestigungs-/Freigabevorrichtung nach einem beliebigen der Patentansprüche 1 und 2, **gekennzeichnet dadurch, dass** die ersten Mittel (4, 16, 21, 26) geeignet sind, eine teilweise oder ganze Loslösung des Tauchrohrs (71) vom Hauptkörper (7) des Kugelsperrbolzens (8) zu steuern.

4. Vorrichtung nach einem beliebigen der Ansprüche 1 bis 3, **gekennzeichnet dadurch, dass** die Verriegelungsmittel eine erste (7, 8, 71) und eine zweite bewegliche Einheit (25) umfassen, wobei die erste Einheit (7, 8, 71) aus besagtem Kugelsperrbolzen (8) besteht, der geeignet ist, mindestens zwei Positionen einzunehmen, eine erste Position, in der er mit dem Träger verbunden ist (1) oder in einem Element, das damit verbunden ist, und eine zweite, in der er vom Träger oder von dem Element, das damit verbunden ist, losgelöst ist, wobei die zweite Einheit (25) aus Mitteln besteht, die beweglich sind zwischen einer ersten Position, genannt Verriegelungsposition, in der sie geeignet sind, in Zusammenwirkung mit dem Kugelsperrbolzen (8), das zweite Teil (14) des Hakens in seiner ersten Position zu blockieren; und einer zweiten Position, wenn die erste Einheit (7, 8, 71) sich in ihrer zweiten Position befindet, wobei die Mittel der zweiten Einheit (25) geeignet sind, in ihrer zweiten Position das bewegliche zweite Teil des Hakens (3) in Richtung auf seine zweite Position freizugeben, und die Mittel der zweiten Einheit (25) geeignet sind, wenn das bewegliche zweite Teil des Hakens (3) in seiner ersten Position ist, an den Hauptkörper (7) des Kugelsperrbolzens und gemäß der Achse OX besagte Kraft F1, proportional zu der Masse des ersten Elements (65) und der Ladung (51), zu übertragen.

5. Vorrichtung nach Anspruch 4, **gekennzeichnet dadurch, dass** die zweite Einheit (25) aus einem Verriegelungsfinger (25) in Form eines L besteht, der mit dem Träger durch eine Drehachse (76) verbunden ist und im Verhältnis zum Träger zwischen einer ersten Position, in der ein Teil der zweiten Einheit in Kontakt mit dem zweiten beweglichen Teil (14) des Hakens ist, so dass der Haken (3) in seiner Betriebsposition ist, und einer zweiten Position zur Loslösung des zweiten Teils (14) des Hakens (3) vom Verriegelungsfinger (25) beweglich ist.

6. Vorrichtung nach Anspruch 5, **gekennzeichnet dadurch, dass** der Verriegelungsfinger (25) eine Basis umfasst, die fähig ist, in Kontakt mit dem freien Ende des zweiten Teils (14) des Hakens (3) zu treten, sowie dadurch, dass diese Basis und dieses freie Ende, die geeignet sind, in Kontakt zu treten, von abgerundeter Form sind, zum Beispiel von halbzylindrischer Form.

7. Vorrichtung nach Anspruch 6, **gekennzeichnet dadurch, dass** das freie Ende des Hauptkörpers (7) des Kugelsperrbolzens (8) auf dem ersten Drittel der Länge des Teils des Verriegelungsfingers liegt, das dazu senkrecht ist, ausgehend von der Basis.

8. Vorrichtung nach einem beliebigen der Ansprüche 1 bis 6, **gekennzeichnet dadurch, dass** die ersten Mittel (4, 16, 21, 26) einen Sensor umfassen (26), zum Beispiel einen Höhenmesser oder chrono-barometrischen, der fähig ist, die Freigabe des genannten ersten und zweiten Elements bei Überschreitung einer Schwelle oder Empfang eines externen Signals einzuleiten.

9. Vorrichtung nach Anspruch 8, **gekennzeichnet dadurch, dass** der Kugelsperrbolzen (8) einstückig mit einem Kabel (21) ist und der Sensor (26) in der Lage ist, die Bewegung dieses Kabel bei Überschreitung einer Schwelle oder Empfang eines externen Signals zu steuern.

10. Vorrichtung nach einem beliebigen der Ansprüche 1 und 9, **gekennzeichnet dadurch, dass** ein halbrunder Wickler an dem Träger befestigt ist und, vorzugsweise, die Verriegelungsmittel mindestens zum Teil an einer Seite dieses Wicklers angeordnet sind, während der Sensor an der anderen Seite des Wicklers angeordnet ist und das Kabel zum Teil auf dem Wickler liegt.

11. Abwurfvorrichtung für eine Ladung von einem Luftfahrzeug mit einer Befestigungs-/Freigabevorrichtung nach einem beliebigen der Ansprüche 1 bis 10, deren Träger einerseits mit einem ersten Fallschirm verbunden ist, Stabilisierungsfallschirm genannt, und andererseits mit dem Sack eines zweiten Fallschirms, Hauptfallschirm genannt.

12. Abwurfvorrichtung nach Anspruch 11, **gekennzeichnet dadurch, dass** sie ein erstes Element umfasst, das mit dem Hauptfallschirm verbunden ist, und eine Ladung, die an dem genannten Haken hängt.

13. Abwurfvorrichtung nach Anspruch 11, **gekennzeichnet dadurch dass** das erste Element ein mittleres zylindrisches Teil umfasst und das Unterteil des Hakens eine zylindrische Öffnung bildet, die komplementär zu der des zylindrischen Teils des ersten Elements ist.

## Claims

1. A device for securing/releasing a first member (65) able to support a load (51), optionally of several tons, with respect to a second member able to support this first member and said load, this second member comprising a support (1), the securing/releasing device comprising, attached on said support (1):
- first means (4, 16, 21, 26) able to trigger release of said first and second members,
- a hook (3) comprising a first fixed part (13) integral with the support (1) and a second part (14) able to support a part of the load and movable with respect to the first part (13) between a first, so-called raised position, where said first and second parts form a hook, and a second position where the first and second parts do not form said hook anymore, the second movable part (14) comprising a first end integral with the first part, for example by a rotation shfaft (11) and supporting at least partially the weight of said load and of the first member when the device is in operation,
- means (7, 8, 25, 71, 76) for locking and unlocking the first position of said second movable part of the hook (3), the first means (4, 16, 21, 26) being able to control the unlocking of the first position of said second movable part of the hook (3),
the device being **characterized in that** the locking and unlocking means (7, 8, 25, 71, 76) comprise a ball spindle (8) comprising a plunger (71) and a main body (7) provided concentrically directly or indirectly in a bore (9) having an axis OX, made in the support (1) or in a member integral therewith, the first means (4, 16, 21, 26) being connected to the plunger (71) of the spindle (8) and/or able to control the movement thereof, and **in that**, in operation, when the second movable part (14) of the hook (3) is locked in its first so-called raised position and the hook (3) supports the first member (65) and a load (51), the second movable part (14) of the hook (3) is in contact with the locking and unlocking means (25) so as to be able to exert, directly or indirectly, on the main body (7) of the ball spindle (8) along the axis OX, a force F1 proportional to the mass of the first member and of the load.

2. The securing/releasing device according to claim 1, **characterized in that**, in operation, when the hook (3) supports the first member (65) and a load (51), the second movable part (14) of the hook is able to exert, directly or indirectly, a force decomposing into a first force F1 on the main body of the spindle along the axis OX and, if needs be, a second force F2 on the main body (7) of the spindle (8) along an axis OY perpendicular to OX, the ratio F1/F2 of the first force to the second force being at least equal to 3 and, preferably, at least equal to 9.

3. The securing/releasing device according to any one of claims 1 and 2, **characterized in that** the first means (4, 16, 21, 26) are able to control a partial or complete release of the plunger (71) from the main body (7) of the spindle (8).

4. The device according to any one of claims 1 to 3, **characterized in that** the locking means comprise a first movable assembly (7, 8, 71) and a second movable assembly (25), the first assembly (7, 8, 71) being constituted by said ball spindle (8) able to assume at least two positions, of which a first position where it is integral with the support (1) or in a member which is integral therewith and a second position where it is released from the support or the member integral therewith, the second assembly (25) being constituted by means movable between a first position, so-called locking position, in which they are able, in cooperation with said spindle (8), to block the second part (14) of the hook in its first position, and a second position when the first assembly (7, 8, 71) is in its second position, said means of the second assembly (25) being able, in their second position, to release said second movable part of the hook (3) towards its second position, and said means of the second assembly (25) being able, when the second movable part of the hook (3) is in its first position, to transmit to the main body (7) of the spindle and along the axis OX, said force F1 proportional to the mass of the first member (65) and of the load (51).

5. The device according to claim 4, **characterized in that** the second assembly (25) is constituted by a L-shaped locking finger (25) secured with the support by a rotation shaft (76) and being movable with respect to the support between a first position, where a part of the second assembly is able to be in contact with the second movable part (14) of the hook, the hook (3) being then in its operational position and a second position able to allow the release of said second part (14) of the hook (3) from the locking finger (25).

6. The device according to any claim 5, **characterized in that** the locking finger (25) has a base able to contact the free end of the second part (14) of the hook (3) and **in that** this base and this free end able to be in contact are of a rounded shape, for example a semicylindrical shape.

7. The device according to claim 6, **characterized in that** the free end of the main body (7) of the spindle (8) lies on the first third of the length of the part of the locking finger which is perpendicular thereto, starting from the base.

8. The device according to any of claims 1 to 6, **characterized in that** the first means (4, 16, 21, 26) comprise a sensor (26), for example of altimeter or chronobarometric type, able to trigger the release of said first and second members upon exceeding a threshold or receiving an exterior signal.

9. The device according to claim 8, **characterized in that** the ball spindle (8) is integral with a cable (21) and the sensor (26) is able to control the movement of this cable upon exceeding a threshold or receiving an exterior signal.

10. The device according to any of claims 1 and 9, **characterized in that** a semicircular reel is attached to the support and, preferably, the locking means are at least partially arranged on a side of this reel while the sensor is arranged on the other side of the reel and the cable lies partially on the reel.

11. A device for airdropping a load from an aircraft comprising a securing/releasing device according to any of claims 1 to 10, the support of which is connected, on one hand, to a first, so-called stabilizing, parachute and, on the other hand, to the bag of a second, so-called main, parachute.

12. The airdropping device according to claim 11, **characterized in that** it comprises a first member integral with the main parachute and a load and hung to said hook.

13. The airdropping device according to claim 11, **characterized in that** said first member has a middle cylindrical part and the lower part of the hook forms a cylindrical opening complementary to that of the cylindrical part of the first member.
